# EUROPEAN PATENT APPLICATION

(11) **EP 2 720 380 A2**
(43) Date of publication of application: **16.04.2014**
(21) Application number: 13004929.9
(22) Date of filing: 15.10.2013
(51) Int. Cl.: H04B 3/54

(54) **Power line communication (PLC) coupling through an external power supply**

(30) Priority: 15.10.2012 US 201261714194 P; 31.05.2013 US 201313907790
(71) Applicant: Broadcom Corporation, Irvine, CA 92617 (US)
(72) Inventor: Agusti Costa, Oriol, BCN08150 Barcelona (ES); Bain, Gordon, Rothesay, Isle of Bute PA20 9DY (GB)
(74) Representative: Jehle, Volker Armin

(57) **Abstract**

Systems and methods according to aspects of the subject technology provide for power line communication (PLC) coupling through two-wire and three-wire external power supplies. In some aspects of the subject technology, a three-wire solution is provided that allows the transfer of direct current (DC) power signals, differential PLC signals, and a zero-cross signal between an external power supply and a PLC device using three wires. This may be accomplished by multiplexing two signals on two of the three wires. In some aspects of the subject technology, a two-wire solution is provided that allows the transfer of DC power signals, differential PLC signals, and a zero-cross signal between an external power supply and a PLC device using two wires. This may be accomplished by multiplexing two signals on one of the wires and three signals on the other wire.

## Description

### CROSS-REFERENCE TO RELATED APPLICATIONS

The present application claims the benefit of U.S. Provisional Patent Application Serial No. 61/714,194, entitled "Powerline Signal Coupling For 2-Wire and 3-Wire Power Supply Units," filed on October 15, 2012, which is hereby incorporated by reference in its entirety for all purposes.

### TECHNICAL FIELD

The present description relates generally to power line communication coupling, and more particularly, but not exclusively, to power line communication coupling through an external power supply.

### BACKGROUND

Power line communication (PLC) systems carry data on a conductor that is also used simultaneously for alternating current (AC) electric power transmission or electric power distribution. Power line communications systems operate by impressing a modulated carrier signal on the wiring system. Power line communications can be used in a home to interconnect home computers, peripherals, and/or home entertainment devices that have a network port, such as an Ethernet port. For example, power line adapter units plug into power outlets and establish a network connection using the existing electrical wiring in the home. The power line adapter units are then coupled to the home devices, such as through Ethernet interfaces, which allows the devices to communicate over power lines. The interconnected home computers, entertainment devices, etc. may receive direct current (DC) power from an external power supply, such as an AC adapter.

### BRIEF SUMMARY OF THE INVENTION

According to an aspect, a power supply unit comprises:
a transformer configured to recover a first power line communication (PLC) signal and a second PLC signal from an alternating current (AC) power signal;
an alternating current/direct current (AC/DC) converter configured to convert the AC power signal into a first DC signal and a second DC signal, wherein the first DC signal is multiplexed with the first PLC signal and the second DC signal is multiplexed with the second PLC signal;
a first signal line coupled to the transformer and the AC/DC converter, wherein the first DC signal is multiplexed with the first PLC signal on the first signal line to be carried over a first wire; and
a second signal line coupled to the transformer and the AC/DC converter, wherein the second DC signal is multiplexed with the second PLC signal on the second signal line to be carried over a second wire.

Advantageously, the power supply unit further comprises:
a zero-cross circuit configured to detect zero-voltage crossings of the AC power signal, and to generate a zero-cross signal based on the detected zero-voltage crossings.

Advantageously, the power supply unit further comprises:
a third signal line coupled to the zero-cross circuit, wherein the third signal line carries the zero-cross signal to a third wire.

Advantageously, the power supply unit further comprises:
the first wire that communicatively couples the first signal line to a PLC device, wherein the first DC signal multiplexed with the first PLC signal is carried from the power supply unit to the PLC device over the first wire;
the second wire that communicatively couples the second signal line to the PLC device, wherein the second DC signal multiplexed with the second PLC signal is carried from the power supply unit to the PLC device over the second wire; and
the third wire that communicatively couples the third signal line to the PLC device, wherein the zero-cross signal is carried from the power supply unit to the PLC device over the third wire.

Advantageously, the PLC device is configured to recover the first PLC signal from the first wire, recover the second PLC signal from the second wire, recover the first DC signal from the first wire, and recover the second DC signal from the second wire.

Advantageously, the power supply unit further comprises:
a modulator coupled to the zero-cross circuit and configured to modulate the zero-cross signal to obtain a modulated zero-cross signal, wherein the modulated zero-cross signal is multiplexed with the first DC signal and the first PLC signal on the first signal line.

Advantageously, the power supply unit further comprises:
the first wire that communicatively couples the first signal line to a PLC device, wherein the multiplexed first DC signal, first PLC signal, and modulated zero-cross signal are carried from the power supply unit to the PLC device over the first wire; and
the second wire that communicatively couples the second signal line to the PLC device, wherein the second DC signal multiplexed with the second PLC signal is carried from the power supply unit to the PLC device over the second wire.

Advantageously, the PLC device is configured to recover the first PLC signal from the first wire, recover the second PLC signal from the second wire, recover the first DC signal from the first wire, recover the second DC signal from the second wire, recover the modulated zero-cross signal from the first wire, and demodulate the modulated zero-cross signal to recover the zero-cross signal.

Advantageously, the zero-cross circuit comprises a photocoupler and at least one of a resistor or a diode, and the zero-cross circuit is coupled to a filter that isolates the zero-cross signal.

Advantageously, the power supply unit is coupled to a mains live wire and a mains neutral wire over which the AC power signal is received, the first PLC signal being carried on the mains live wire and the second PLC signal being carried on the mains neutral wire.

Advantageously, the first PLC signal and the second PLC signal are out of phase by approximately 180 degrees.

Advantageously, the first DC signal comprises a DC power signal and the second DC signal comprises a DC ground signal.

Advantageously, the power supply unit further comprises:
a first filter coupled to the first signal line between the AC/DC converter and the transformer, wherein the first filter is configured to filter the DC power signal from the first DC signal output by the AC/DC converter; and
a second filter coupled to the second signal line between the AC/DC converter and the transformer, wherein the second filter is configured to filter the DC ground signal from the second DC signal output by the AC/DC converter.

According to an aspect, a power line communication (PLC) device comprises:
a first signal line coupled to an external power supply, wherein the first signal line is configured to carry a first signal from the external power supply;
a second signal line coupled to the external power supply, wherein the second signal line is configured to carry a second signal from the external power supply;
a first filter coupled to the first signal line and configured to filter the first signal to recover a direct current (DC) power signal;
a second filter coupled to the second signal line and configured to filter the second signal to recover a DC ground signal; and
a transformer coupled to the first signal line and the second signal line, wherein the transformer is configured to recover a first PLC signal and a second PLC signal from the first signal.

Advantageously, the PLC device further comprises:
a third filter coupled to the first signal line and configured to filter the first signal to recover a modulated zero-cross signal; and
a demodulator coupled to the third filter and configured to demodulate the modulated zero-cross signal to recover a zero-cross signal.

Advantageously, the PLC device further comprises:
a third signal line coupled to the external power supply, wherein the third signal line is configured to carry a third signal from the external power supply; and
a third filter coupled to the third signal line, wherein the third filter is configured to filter the third signal to recover a zero-cross signal.

According to an aspect, a method is provided for coupling a power line communication (PLC) device to an external power supply, the method comprising:
receiving alternating current (AC) power signals a first power line communication (PLC) signal and a second PLC signal over mains wires;
converting the AC power signals to a direct current (DC) power signal and a DC ground signal;
multiplexing the first PLC signal with the DC power signal;
multiplexing the second PLC signal with the DC ground signal; and
transmitting the multiplexed first PLC signal and DC power signal over a first wire, and the multiplexed second PLC signal and ground DC signal over a second wire.

Advantageously, the method further comprises:
generating a zero-cross signal based on detected zero-voltage crossings of the AC power signals.

Advantageously, the method further comprises:
transmitting the zero-cross signal over a third wire.

Advantageously, the method further comprises:
modulating the zero-cross signal;
multiplexing the zero-cross signal with the first PLC signal and the DC power signal; and
transmitting the multiplexed zero-cross signal, first PLC signal and DC power signal over the first wire.

### BRIEF DESCRIPTION OF THE DRAWINGS

Certain features of the subject technology are set forth in the appended claims. However, for purpose of explanation, several embodiments of the subject technology are set forth in the following figures.

FIG. 1 illustrates an example power line network environment in which a system for power line communication coupling through an external power supply may be implemented in accordance with one or more implementations.

FIG. 2 illustrates an example power line network environment in which a system for power line communication coupling through an external power supply may be implemented in accordance with one or more implementations.

FIG. 3 illustrates an example system for power line communication coupling through a three-wire external power supply in accordance with one or more implementations.

FIG. 4 illustrates an example system for power line communication coupling through a two-wire external power supply in accordance with one or more implementations.

FIG. 5 illustrates a flow diagram of an example process of a system for power line communication coupling through a three-wire external power supply in accordance with one or more implementations.

FIG. 6 illustrates an example flow diagram of an example process of a system for power line communication coupling through a two-wire external power supply in accordance with one or more implementations.

FIG. 7 illustrates an example circuit configuration diagram of a system for power line communication coupling through a three-wire external power supply in accordance with one or more implementations.

FIG. 8 illustrates an example circuit configuration of a system for power line communication coupling through a two-wire external power supply in accordance with one or more implementations.

FIG. 9 illustrates an example circuit configuration of a system for multiple input multiple output (MIMO) power line communication coupling through a three-wire external power supply in accordance with one or more implementations.

FIG. 10 illustrates an example frequency spectrum for signals multiplexed in a two-wire external power supply in accordance with one or more implementations.

FIG. 11 conceptually illustrates an electronic system with which one or more implementations of the subject technology may be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced using one or more implementations. In one or more instances, structures and components are shown in block diagram form in order to avoid obscuring the concepts of the subject technology.

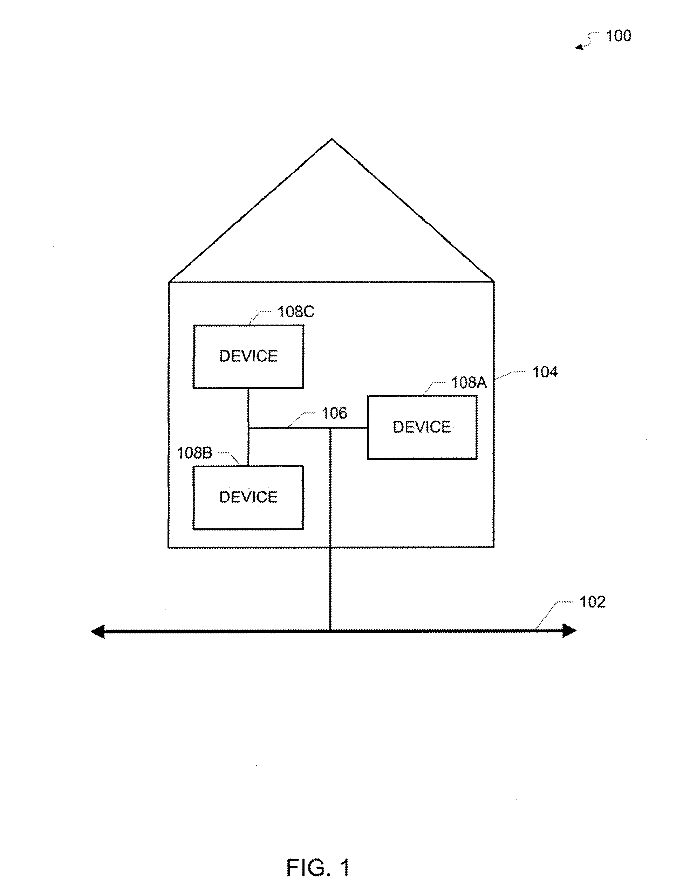

FIG. 1 illustrates an example power line network environment 100 in which a system for power line communication coupling through an external power supply may be implemented in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example power line network environment 100 includes an external power line 102, and a building 104, such as a house, an apartment building, an office building, or generally any building for which it may be desirable to communicatively couple devices over power lines. The building 104 includes one or more internal power lines 106 and electronic devices 108A-C.

The external power line 102 and the internal power lines 106 may be any cables or wires that can carry electricity, such as wires made of copper or other conductors, and may be referred to as power cables, power lines, electrical power lines, electrical wiring, electrical cabling, etc. The external power line 102 may carry alternating current (AC) power signal from a power source. The external power line 102 may be coupled to an electricity source, such as an electrical provider. The external power line 102 and/or the internal power lines 106 may each include multiple wires that can carry current, such as a live wire, a neutral wire, and/or a ground wire that may also be referred to as a protective earth wire. For example, the external power line and/or the internal power lines 106 may each include a live wire that carries an electrical current from the electricity source and a neutral wire that provides the return path for the electrical current. In one or more implementations, the external power line 102 and/or the internal power lines 106 may carry an alternating current (AC) power signal. The AC power signal may have, for example, an amplitude of 110 Volts (V) or 230 V and a frequency of 50 Hertz (Hz) or 60 Hz.

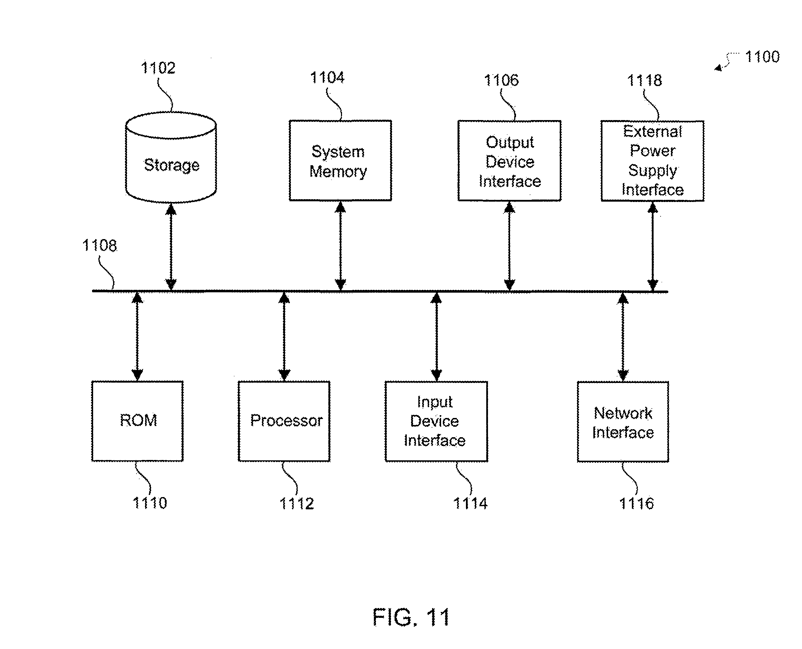

The electronic devices 108A-C may be any devices that are capable of coupling a data signal onto the internal power lines 106, such as power line communication devices, power line modems, or electronic devices that include power line communication devices, power line modems, and/or power line communication circuitry embedded therein. One or more of the electronic devices 108A-C may have a power line communication network port that is shared with a power port. For example, power line the electronic devices 108A-C may include devices that are communicatively coupled to a power line communication network, e.g. via an AC power adapter, and include power line circuitry embedded therein. Such devices may include, for example, a laptop or desktop computer, network devices, e.g. routers, switches, etc., set-top boxes, televisions or other displays with one or more processors coupled thereto and/or embedded therein, or other appropriate computing devices that can be communicatively coupled to a power line communication network, e.g. the internal power lines 106. Any of the electronic devices 108A-C may include a memory for storing instructions and a processor that executes the instructions stored in the memory, and/or any of the devices 108A-C may be coupled to a computing device that includes such a memory and/or such a processor. In one or more implementations, any of the devices 108A-C may be, may include, or may be part of, the system and/or components thereof that are described below with respect to Fig. 11.

The electronic devices 108A-C may be configured to impress, or superimpose, a modulated carrier signal, e.g. a power line communication signal, onto the internal power lines 106, e.g. onto the AC power signal. The power line communication signal may be modulated with data using BPSK, QPSK, 8-QAM, 16-QAM, 64-QAM, 256-QAM, 1024-QAM, and/or other modulation schemes. The power line communication signal may have a frequency from 1 megahertz (MHz) to 28 MHz according to the HomePlug specification. However, the frequency range may be extended to 86 MHz according to the HomePlug 2.0 specification, and the frequency range may be extended further in future specifications. Furthermore, aspects of the subject technology may be used to couple any signal, e.g. within 1MHz to beyond 100MHz, and may be used with different specifications, such as G.hn, HPAV1.1, HPAV 2.0, and MIMO. The appropriate frequency range depends on coupling transformer specifications, and thus the operational bandwidth can be modified.

The electronic devices 108A-C may utilize the zero-crossing of the AC power signal, e.g. the instantaneous point where there is no voltage present, for synchronization. The electronic devices 108A-C may use one or more carrier frequencies to transmit the modulated carrier signal, e.g. any frequencies from 1 Megahertz (MHz) to 86 MHz. The carrier frequencies may differ from the power current frequency, e.g. 50-60 Hertz. The power line communication signals transmitted by the electronic devices 108A-C over the internal power lines 106 may be differential signals. For example, a first power line communication signal, e.g. a positive power line communication signal, may be transmitted over a live wire of the internal power lines 106, and a second power line communication signal, e.g. a negative power line communication signal, that is an inverse signal of the first power line communication signal, may be transmitted over the neutral wire of the internal power lines 106. The first and second power line communication signals may be out of phase by approximately 180 degrees. Thus, one of the power line communication signals may be referred to as a positive power line communication signal and the other power line communication signal may be referred to as a negative power line communication signal.

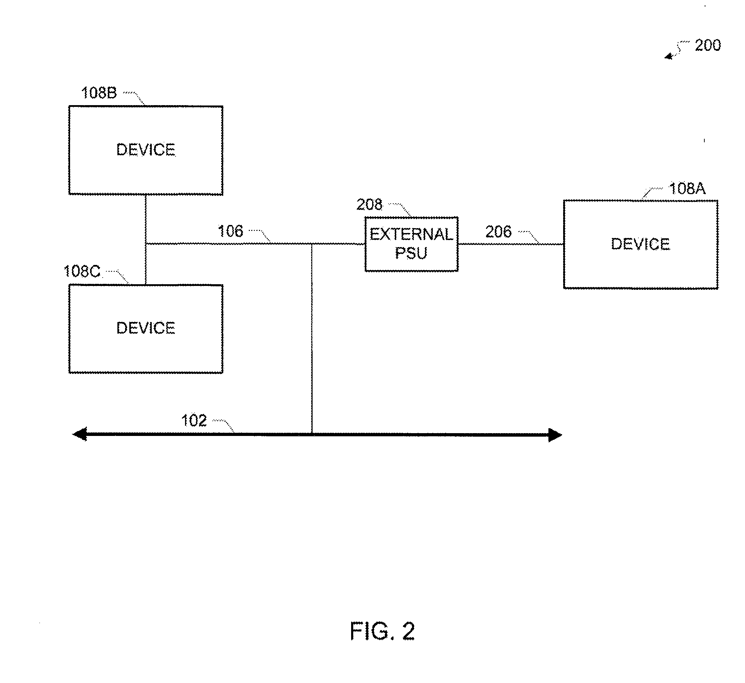

FIG. 2 illustrates an example power line network environment 200 in which a system for power line communication coupling through an external power supply may be implemented in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example power line network environment 200 includes an external power line 102, internal power lines 106, electronic devices 108A-C, an external power supply 208 (also referred to as a power supply unit), and a connector 206. The external power supply 208 may be coupled to the electronic device 108A via the connector 206. The external power supply 208 may be external to the electronic device 108A, e.g. the external power supply may not share any housing in common with the electronic device 108A. The connector 206 may include multiple wires, such as two wires or three wires. For example, a two-wire connector 206 may be used to direct current (DC) power an electronic device 108A, such as a set-top box, when the electronic device is powered with DC voltage, while a three-wire connector 206 may be used for an electronic device 108A that requires a protective earth connection or signaling between the external power supply 208 and the electronic device 108A. The external power supply 208 may be an AC adapter that converts AC power signals received over the live and neutral wires of the internal power lines 106 into DC signals, e.g. a DC power signal and a DC ground signal. The external power supply 208 may provide the DC signals to the electronic device 108A, e.g. to power the electronic device 108A.

As previously discussed, the electronic devices 108A-C may impress differential power line communication signals on the live and neutral wires of the internal power lines. Accordingly, the differential power line communication signals are received by the external power supply 208 and are transmitted to the electronic device 108A over the connector 206. Further in this regard, since the AC power signals are converted to DC power signals by the external power supply 208, the electronic device 108A may be unable to determine the zero-crossing of the AC power signals. Thus, the external power supply 208 may generate a zero-cross signal that is indicative of the zero-crossing of the AC power signal and may transmit the zero-cross signal to the electronic device 108A via the connector 206. Accordingly, in one or more implementations the external power supply 208 transmits five signals to an electronic device 108A: the DC power signal, the DC ground signal, the first power line communication signal, the second power line communication signal, and the zero-cross signal. However, as previously discussed, the connector 206 between the external power supply 208 and the electronic devices 108A-C may only include two or three wires.

In the subject system for power line communication coupling through an external power supply, the external power supply 208 may be embedded with circuitry for multiplexing the five signals over two or three signal lines for transmission to the electronic device 108A over the two or three wires of the connector 206. The electronic device 108A may be embedded with circuitry for recovering the five individual signals from the two or three signals received from the external power supply 208 over the two or three wires of the connector 206. Since the signals are multiplexed over two or three wires, standard two and three wire connectors 206 may be used to couple the electronic device 108A to the external power supply 208. In addition, an existing and/or standard external power supply 208 may be modified to multiplex the signals over the two or three wires, e.g. by an add-on circuit that can be made compatible with existing hardware.

Thus, the subject system can be implemented independent of the external power supply 208 technology and independent of the input voltage range. Furthermore, manufacturers can keep the same number of wires that they currently use in external power supplies 208 while providing power line communication. Accordingly, the subject system allows power line communication functionality to be embedded into electronic devices 108A-C at low cost, since many components can be reused.

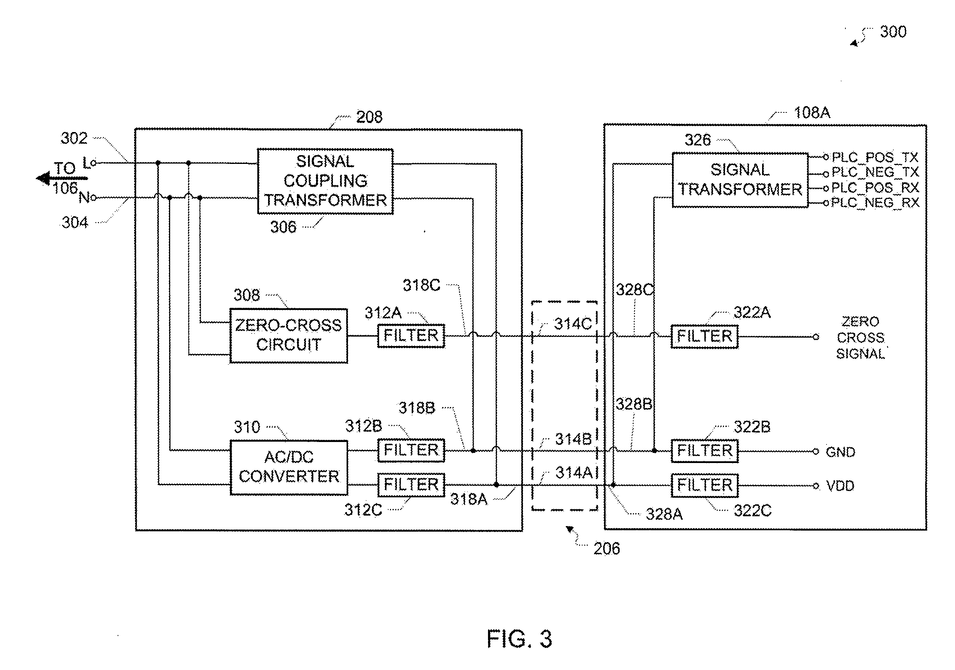

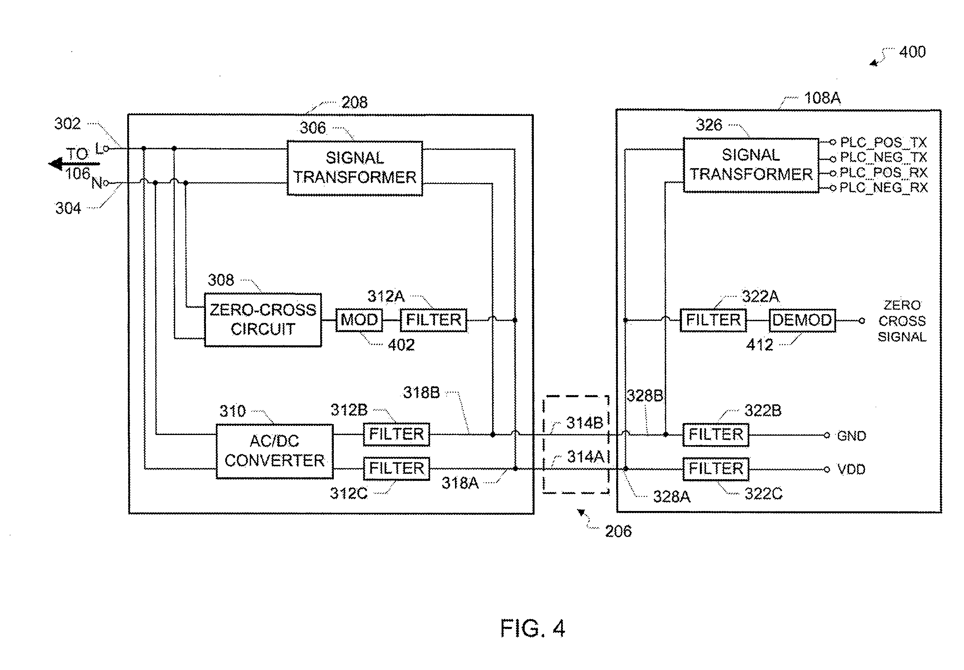

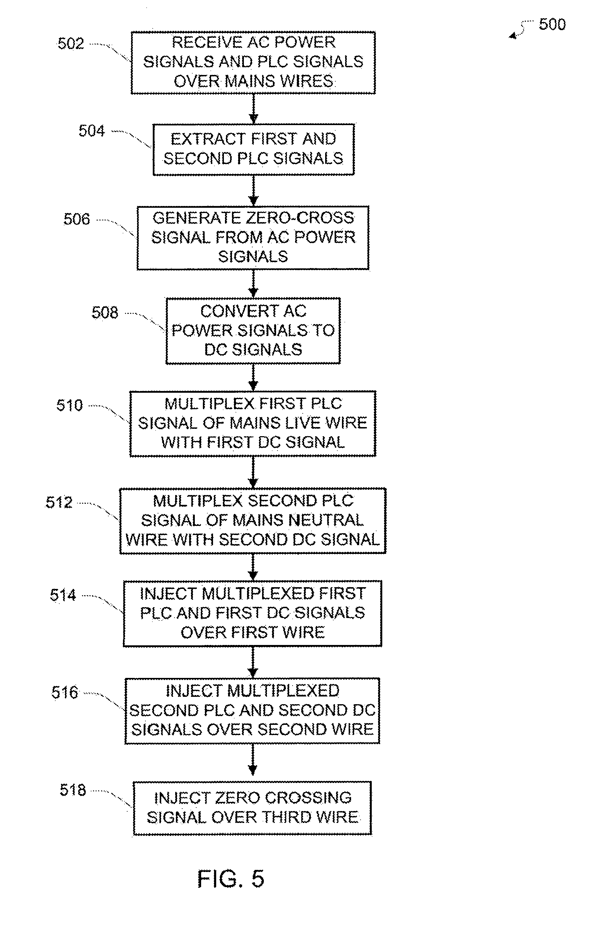

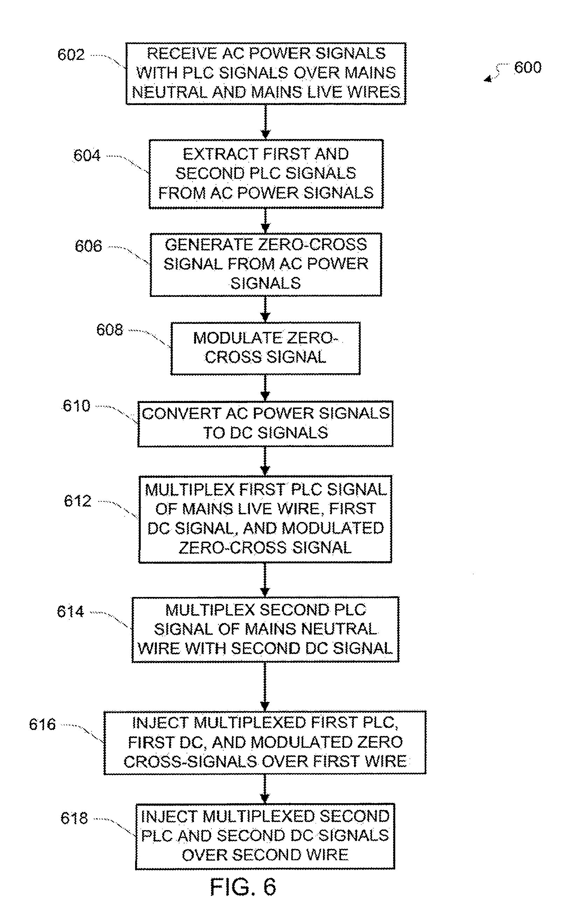

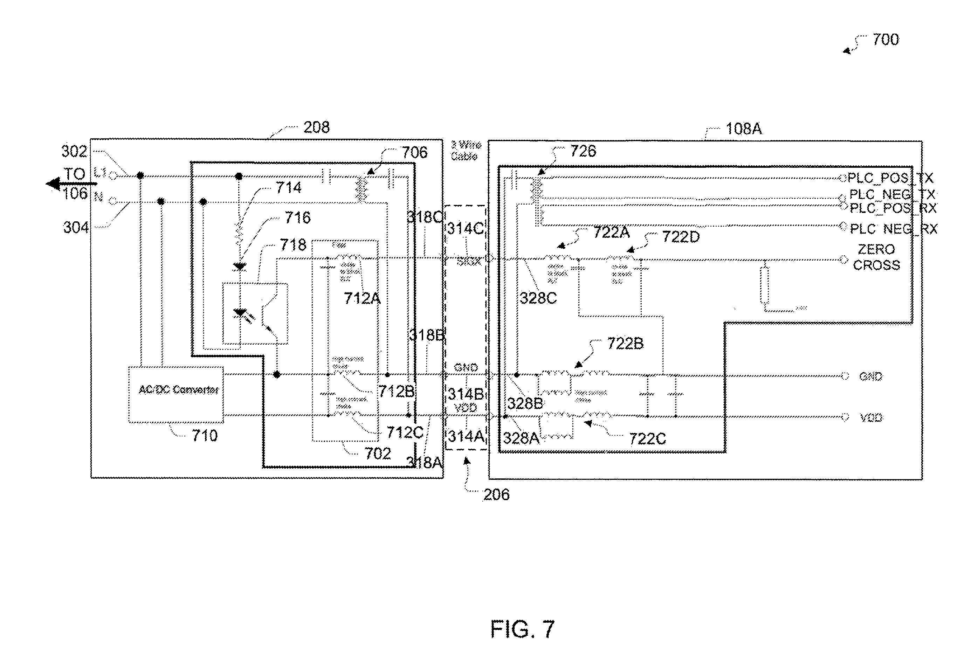

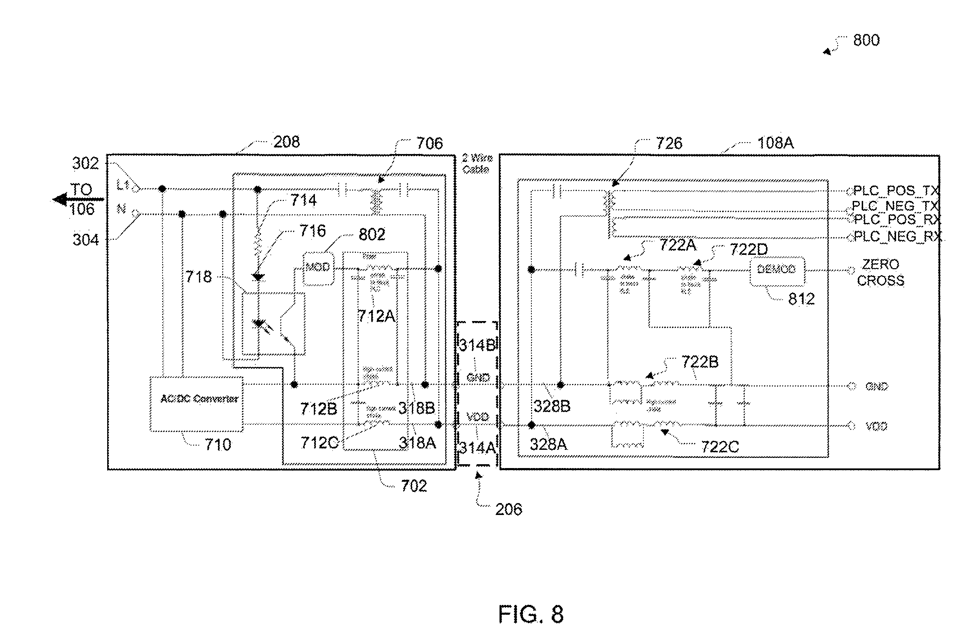

An example system for power line communication coupling through a three-wire external power supply 208 is discussed further below with respect to Fig. 3, an example circuit configuration for power line communication coupling through a three-wire external power supply 208 is discussed further below with respect to Fig. 7 and an example process for power line communication coupling through a three-wire external power supply 208 is discussed further below with respect to Fig. 5. An example system for power line communication coupling through a two-wire external power supply 208 is discussed further below with respect to Fig. 4, an example circuit configuration for power line communication coupling through a two-wire external power supply 208 is discussed further below with respect to Fig. 8 and an example process for power line communication coupling through a two-wire external power supply 208 is discussed further below with respect to Fig. 6.

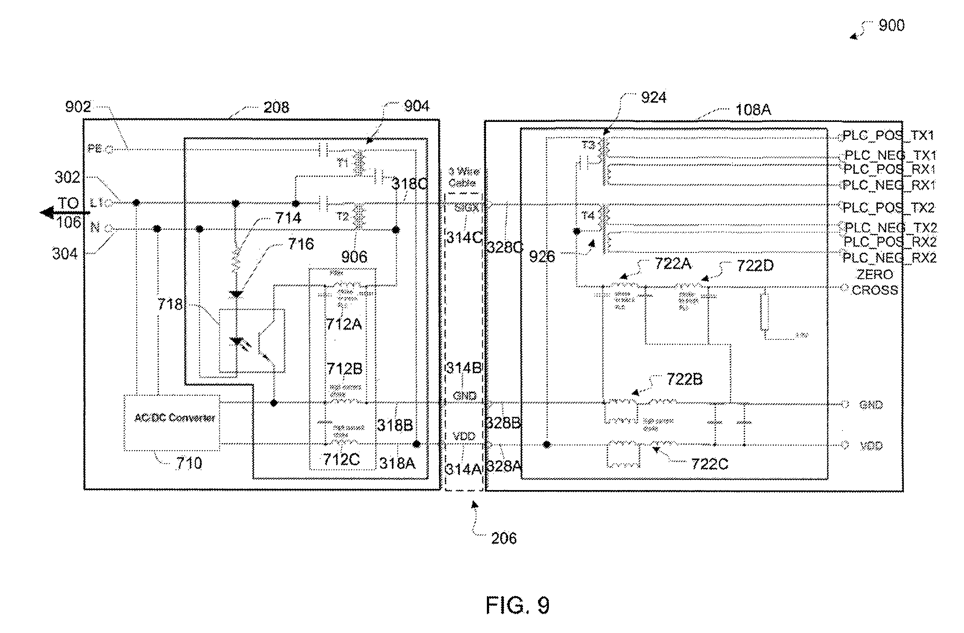

In one or more implementations, the electronic devices 108A-C may be configured to communicate over the internal power lines 106 using multiple input multiple output (MIMO) power line communications. For example, the electronic devices 108A-C may transmit and/or receive multiple power line communication signals, such as two signals, simultaneously, e.g. using combinations of the live wire, the neutral wire, and/or the protective earth wire. Thus, MIMO power line communications may be able to provide higher throughput and coverage for power line communications. The additional signals used in the MIMO power line communications are multiplexed onto the three wires of the connector 206 and transmitted from the external power supply 208 to the electronic device 108A. An example circuit configuration for MIMO power line communication coupling through a three-wire external power supply 208 is discussed further below with respect to Fig. 9.

FIG. 3 illustrates an example system 300 for power line communication coupling through a three-wire external power supply in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example system 300 includes an electronic device 108A, an external power supply 208, and a connector 206. In one or more implementations, the external power supply 208 may be coupled to a live wire 302 and a neutral wire 304 of internal power lines 106, such as via a power outlet. The connector 206 includes three wires 314A-C. The external power supply 208 includes a signal coupling transformer 306, a zero-cross circuit 308, an AC/DC converter 310, filters 312A-C and signal lines 318A-C. The electronic device 108A includes a signal transformer 326, filters 322A-C and signal lines 328A-C. The signal lines 318A-C of the external power supply 208, and the signal lines 328A-C of the electronic device 108A, are coupled to the wires 314A-C, respectively, of the connector 206.

In the external power supply 208, the signal coupling transformer 306 is coupled and/or communicatively coupled to the live wire 302 and the neutral wire 304, e.g. of the internal power lines 106. The signal coupling transformer 306 is also coupled to the first and second signal lines 318A-B. The signal coupling transformer 306 may be configured to couple the power line communication signals from the live wire 302 and the neutral wire 304 to the first and second signal lines 318A-B. The signal coupling transformer 306 may provide galvanic isolation, may have a very flat frequency response within the bandwidth of the power line communication signals, and may have very low transmission losses. Thus, the signal coupling transformer 306 may effectively filter frequencies other than those used by the power line communication signals, and may couple only the power line communication signals to the first and second signal lines 318A-B.

The zero-cross circuit 308 is coupled and/or communicatively coupled to the live wire 302 and the neutral wire 304, e.g. of the internal power lines 106. The zero-cross circuit 308 is also coupled to the filter 312A which is coupled to the third signal line 318C. The zero-cross circuit 308 detects the zero voltage crossings of the mains voltage waveform, e.g. as received over the live wire 302 and the neutral wire 304, and is configured to generate a zero-cross signal that is indicative of the zero voltage crossings. The zero-cross circuit 308 may generate a zero-cross signal at a low frequency, e.g. tens of Hertz. In one or more implementations, the zero-cross circuit 308 may include a resistor to limit the current of the zero-cross circuit 308, a diode to protect the zero-cross circuit 308 during the reverse voltage cycle and to reduce power consumption, and a photocoupler to provide isolation between the primary and secondary parts of the zero-cross circuit 308. The photocoupler may also be referred to as an opto-isolator, an optocoupler, and/or an optical isolator. The filter 312A may be, or may include, a choke that blocks/isolates any noise that is picked up by the connector 206 or generated by the external power supply 208.

The AC/DC converter 310 is coupled and/or communicatively coupled to the live wire 302 and the neutral wire 304, e.g. of the internal power lines 106. The AC/DC converter 310 converts the AC power signals received over the live wire 302 and the neutral wire 304 into DC signals, e.g. a DC power signal and a DC ground signal. The AC/DC converter 310 is coupled to the filter 312B which is coupled to the signal line 318B. The AC/DC converter 310 is also coupled to the filter 312C which is coupled to the signal line 318A. The filters 312B-C may be chokes that remove the power line communication signals from the output of the AC/DC converter 310, e.g. to avoid crosstalk that may lead to performance and dynamic range loss, and that isolate the power supply output capacitance and noise. In one or more implementations, the choke ratings of the chokes used in the filters 312B-C may be determined such that choke saturation is substantially avoided. In one or more implementations, choke saturation may translate into sudden impedance changes as peak current occurs which may limit throughput and may generate error bursts in reception.

Thus, the first power line communication signal and a first DC signal, e.g. the DC power signal, are multiplexed onto the first signal line 318A, the second power line communication signal and a second DC signal are multiplexed on to the second signal line 318B, and the zero-cross signal is carried on the third signal line 318C. The signal lines 318A-C carry the signals to the wires 314A-C of the connector 206, and the signals are carried over the wires 314A-C of the connector to the signal lines 328A-C of the electronic device 108A.

In the electronic device 108A, the signal transformer 326 is coupled to the first and second signal lines 328A-C. The signal transformer 326 may have one or two secondaries. The signal transformer 326 recovers the first and second power line communication signals from the first and second signals carried over the first and second signal lines 328A-B. In one or more implementations, the signal transformer 326 may provide galvanic isolation. However, in other implementations, the signal transformer 326 may not provide galvanic isolation. The signal transformer 326 may also be configured to couple power line communication signals being transmitted by the electronic device 108A to the first and second signal lines 328A-B.

The third signal line 328C is coupled to a filter 322A. The filter 322A may include chokes that are arranged in a low pass filter fashion. The chokes may block any noise picked up while the zero-cross signal was carried over the wire 314C. Thus, the filter 322A recovers the zero-cross signal by filtering out any noise from a third signal received over the third signal line 328C. The first and second signal lines 328A-B are coupled to filters 322B-C. The filters 322B-C may be used to reject the power line communication signals carried over the wires 314A-B, e.g. to avoid cross talk and isolate load capacitance and noise from the power and transmission cable. Thus, the filter 322B may recover the DC ground signal from the second signal carried on the second signal line 328B by filtering out the second power line communication signal from the second signal. Similarly, the filter 322C may recover the DC power signal from the first signal carried on the first signal line 328A by filtering out the first power line communication signal from the first signal.

It is to be appreciated that signals that are described as being multiplexed onto a wire or a signal line are exemplary, and that the signals may be multiplexed in different groups on one or more wires or signal lines. In one or more implementations, the subject system may be used to couple a power line communication signal generated by a power line communication chipset that is DC powered at a low voltage, such as 3V, to a high voltage media like mains wires. For example, the signal transformer 326 may couple differential power line communication signals generated by the electronic device 108A to the first and second signal lines 328A-B and the signal coupling transformer 306 may couple the power line communication signals onto the mains live wire 302 and the main neutral wire 304.

FIG. 4 illustrates an example system 400 for power line communication coupling through a two-wire external power supply in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example system 400 includes an electronic device 108A, an external power supply 208, and a connector 206. In one or more implementations, the external power supply 208 may be coupled to a live wire 302 and a neutral wire 304 of internal power lines 106, such as via a power outlet. The connector 206 includes two wires 314A-B. The external power supply 208 includes a signal coupling transformer 306, a zero-cross circuit 308, an AC/DC converter 310, filters 312A-C, signal lines 318A-B, and a modulator 402. The electronic device 108A includes a signal transformer 326, filters 322A-C, signal lines 328A-B, and a demodulator 412. The signal lines 318A-B of the external power supply 208, and the signal lines 328A-B of the electronic device 108A, are coupled to the wires 314A-B, respectively, of the connector 206.

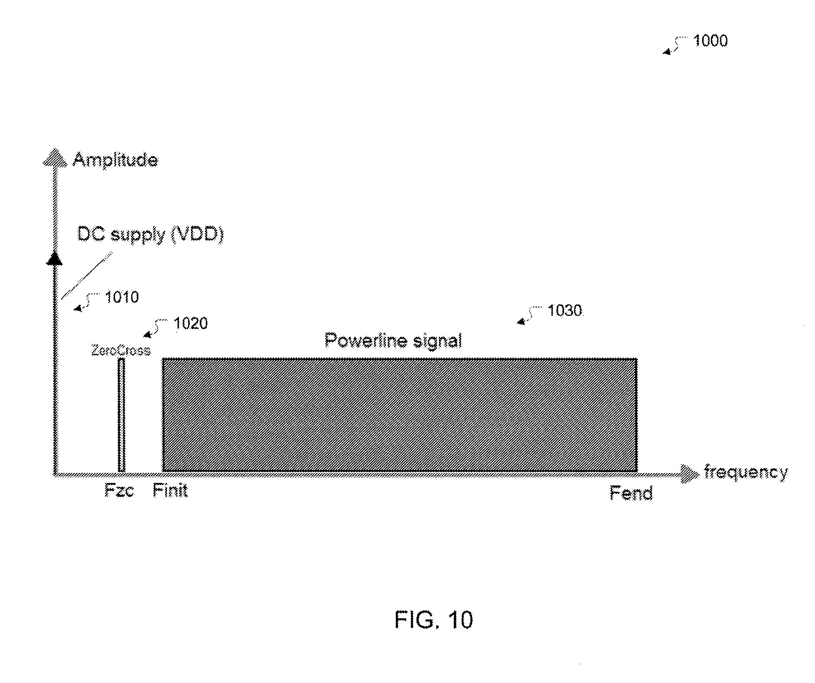

The external power supply 208 of the example system 400 may be configured similarly to the external power supply 208 of the example system 300. However, the external power supply 208 of the example system 400 further includes a modulator 402 that is coupled to the zero-cross circuit 308 and the filter 312A. The modulator 402 upconverts the zero-cross signal to a frequency that is located just below the power line communication frequency spectrum, e.g. a frequency just below 1MHz. An example frequency spectrum illustrating the upconverted zero-cross signal frequency is discussed further below with respect to Fig. 10. The modulator 402 is embedded in the external power supply 208 to perform the upconversion. The modulator 402 may modulate the zero-cross signal using any modulation, such as amplitude modulation. The modulated zero-cross signal is then filtered by the filter 312A and multiplexed on the first signal line 318A with the first power line communication signal, e.g. the positive power line communication signal, and the first DC signal, e.g. the DC power signal.

The electronic device 108A of the example system 400 may be configured similarly to the electronic device 108A of the example system 300. However, the electronic device 108A of the example system 400 further includes a demodulator 412. The filter 322A may include one or more chokes that in combination with one or more decoupling capacitors perform a band pass filtering process. The band pass filtering process filters out the first power line communication signal and the DC power signal from the signal carried on the first signal line 328A, thus recovering the modulated zero-cross signal. The modulated zero-cross signal is passed to the demodulator 412. The demodulator 412 demodulates and downconverts the modulated zero-cross signal to recover the zero-cross signal. In one or more implementations, the demodulator 412 may detect the envelope of the modulated zero-cross signal, thereby achieving the down conversion and detection simultaneously. Alternatively, or in addition, the demodulator 412 may implement coherent demodulation, or any other suitable demodulation.

FIG. 5 illustrates an example flow diagram of an example process 500 of a system for power line communication coupling through a three-wire external power supply in accordance with one or more implementations. For explanatory purposes, example process 500 is described herein with reference to the example system 300 of Fig. 3; however, example process 500 is not limited to the example system 300 of Fig. 3. Further for explanatory purposes, the blocks of example process 500 are described herein as occurring in serial, or linearly. However, multiple blocks of example process 500 may occur in parallel. In addition, the blocks of example process 500 need not be performed in the order shown and/or one or more of the blocks of example process 500 need not be performed.

The external power supply 208 receives alternating current (AC) power signals and first and second power line communication signals carried on a mains live wire 302 and a mains neutral wire 304 (502), e.g. a positive power line communication signal may be carried on the mains live wire 302 and a negative power line communication signal may be carried on the mains neutral wire 304. The first and second power line communication signals may be approximately 180 degrees out of phase.

The signal coupling transformer 306 of the external power supply 208 extracts the first and second power line communication signals, e.g. by filtering out the AC power signals (504). The zero-cross circuit 308 of the external power supply 208 generates a zero-cross signal that is indicative of the zero-voltage crossings of the AC power signals (506). The AC/DC converter 310 of the external power supply 208 converts the AC power signals into a first DC signal, e.g. a DC power signal, and a second DC signal, e.g. a DC ground signal (508). The first power line communication signal is multiplexed with the first DC signal on the first signal line 318A (510). The second power line communication signal is multiplexed with the second DC signal on the second signal line 318B (512).

The multiplexed first power line communication and first DC signals are carried over the first wire 314A to the electronic device 108A (514). The multiplexed second power line communication and second DC signals are carried over the second wire 314B to the electronic device 108A (516). The zero-cross signal is carried over the third wire 314C to the electronic device 108A (518). The electronic device 108A recovers the first and second power line communication signals, the zero-cross signal, the DC power signal, and the DC ground signal from the signals carried over the three wires 314A-C.

FIG. 6 illustrates an example flow diagram of an example process 600 of a system for power line communication coupling through a two-wire external power supply in accordance with one or more implementations. For explanatory purposes, example process 600 is described herein with reference to the example system 400 of Fig. 4; however, example process 600 is not limited to the example system 400 of Fig. 4. Further for explanatory purposes, the blocks of example process 600 are described herein as occurring in serial, or linearly. However, multiple blocks of example process 600 may occur in parallel. In addition, the blocks of example process 600 need not be performed in the order shown and/or one or more of the blocks of example process 600 need not be performed.

The external power supply 208 receives alternating current (AC) power signals and first and second power line communication signals carried on a mains live wire 302 and a mains neutral wire 304 (602), e.g. a positive power line communication signal may be carried on the mains live wire 302 and a negative power line communication signal may be carried on the mains neutral wire 304. The first and second power line communication signals may be approximately 180 degrees out of phase.

The signal coupling transformer 306 of the external power supply 208 extracts the first and second power line communication signals, e.g. by filtering out the AC power signals (604). The zero-cross circuit 308 of the external power supply 208 generates a zero-cross signal that is indicative of the zero-voltage crossings of the AC power signals (606). The modulator 402 of the external power supply 208 modulates the zero-cross signal (608). The AC/DC converter 310 of the external power supply 208 converts the AC power signals into a first DC signal, e.g. a DC power signal, and a second DC signal, e.g. a DC ground signal (610). The first power line communication signal, the first DC signal and the modulated zero-cross signal are multiplexed on the first signal line 318A (612). The second power line communication signal is multiplexed with the second DC signal on the second signal line 318B (614).

The multiplexed first power line communication, first DC signal, and modulated zero-cross signal are carried over the first wire 314A to the electronic device 108A (616). The multiplexed second power line communication signal and second DC signal are carried over the second wire 314B to the electronic device 108A (618). The electronic device 108A recovers the first and second power line communication signals, the zero-cross signal, the DC power signal, and the DC ground signal from the signals carried over the two wires 314A-B.

FIG. 7 illustrates an example circuit configuration 700 of a system for power line communication coupling through a three-wire external power supply in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example circuit configuration 700 operates in the manner discussed above with respect to the example system 300 of Fig. 3. The example circuit configuration 700 includes an electronic device 108A, an external power supply 208, and a connector 206. In one or more implementations, the external power supply 208 may be coupled to a live wire 302 and a neutral wire 304 of internal power lines 106, such as via a power outlet. The connector 206 includes three wires 314A-C. The external power supply 208 includes a signal coupling transformer 706, a zero-cross resistor 714, a zero-cross diode 716, a photocoupler 718, a filter 702 that includes chokes 712A-C, an AC/DC converter 710, and signal lines 318A-C. The electronic device 108A includes a signal transformer 726, chokes 722A-D, and signal lines 328A-C. The signal lines 318A-C of the external power supply 208, and the signal lines 328A-C of the electronic device 108A, are coupled to the wires 314A-C, respectively, of the connector 206.

In the external power supply 208, the signal coupling transformer 706 is coupled and/or communicatively coupled to the live wire 302 and the neutral wire 304, e.g. of the internal power lines 106. The signal coupling transformer 306 is also coupled to the first and second signal lines 318A-B. The signal coupling transformer 706 may be further coupled to one or more signal coupling capacitors. The zero-cross resistor 714, the zero-cross diode 716, and the photocoupler 718 collectively form a zero-cross circuit. The choke 712A blocks power line communication signals from the zero-cross signal output by the zero cross circuit. The chokes 712B-C are high current chokes that remove the power line communication signals from the output of the AC/DC converter 710 and that isolate the power supply output capacitance and noise.

In the electronic device 108A, the signal transformer 726 is coupled to the first and second signal lines 328A-B. The signal transformer 726 has two secondaries, one for power line communication signals being received by the electronic device 108A, e.g. a received positive power line communication signal and a received negative power line communication signal, and another for power line communication signals being transmitted by the electronic device 108A, e.g. a transmitted positive power line communication signal and a transmitted negative power line communication signal. The signal transformer 726 may further be coupled to one or more coupling capacitors. The chokes 722A, D may be arranged in a low pass filter fashion to block any noise picked up on the while the zero-cross signal was transmitted over the wire 314C. The chokes may be coupled to one or more coupling capacitors. The chokes 722B-C may be high current chokes and may also be coupled to one or more decoupling capacitors.

FIG. 8 illustrates an example circuit configuration 800 of a system for power line communication coupling through a two-wire external power supply in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example circuit configuration 800 operates in the manner discussed above with respect to the example system 400 of Fig. 4. The example circuit configuration 800 includes an electronic device 108A, an external power supply 208, and a connector 206. In one or more implementations, the external power supply 208 may be coupled to a live wire 302 and a neutral wire 304 of internal power lines 106, such as via a power outlet. The connector 206 includes three wires 314A-C. The external power supply 208 includes a signal coupling transformer 706, a zero-cross resistor 714, a zero-cross diode 716, a photocoupler 718, a filter 702 that includes chokes 712A-C, an AC/DC converter 710, signal lines 318A-B, and a modulator 802. The electronic device 108A includes a signal transformer 726, chokes 722A-D, signal lines 328A-B, and a demodulator 812. The signal lines 318A-B of the external power supply 208, and the signal lines 328A-C of the electronic device 108A, are coupled to the wires 314A-B, respectively, of the connector 206.

The external power supply 208 of the example circuit configuration 800 may be configured similarly to the external power supply 208 of the example circuit configuration 700. However, the external power supply 208 of the example circuit configuration 800 further includes a modulator 802. The electronic device 108A of the example circuit configuration 800 may be configured similarly to the electronic device 108A of the example circuit configuration 700. However, the electronic device 108A of the example circuit configuration 800 further includes a demodulator 812. The modulator 802 and the demodulator 812 may function as described above with respect to the example system 400 of Fig. 4.

FIG. 9 illustrates an example circuit configuration 900 of a system for multiple input multiple output (MIMO) power line communication coupling through a three-wire external power supply using three wires in accordance with one or more implementations. Not all of the depicted components may be required, however, and one or more implementations may include additional components not shown in the figure. Variations in the arrangement and type of the components may be made without departing from the spirit or scope of the claims as set forth herein. Additional, different or fewer components may be provided.

The example circuit configuration 900 includes an electronic device 108A, an external power supply 208, and a connector 206. In one or more implementations, the external power supply 208 may be coupled to a live wire 302 and a neutral wire 304 of internal power lines 106, in addition to a protective earth (PE) wire 902. The connector 206 includes three wires 314A-C. The external power supply 208 includes signal coupling transformers 904, 906, a zero-cross resistor 714, a zero-cross diode 716, a photocoupler 718, a filter 702 that includes chokes 712A-C, an AC/DC converter 710, and signal lines 318A-C. The electronic device 108A includes signal transformers 924, 926, chokes 722A-D, and signal lines 328A-C. The signal lines 318A-C of the external power supply 208, and the signal lines 328A-C of the electronic device 108A, are coupled to the wires 314A-C, respectively, of the connector 206.

In a MIMO power line communication system, two signal coupling transformers 904, 906 are used to impress multiple power line communication signals onto one or more combinations of the live wire 302, the neutral wire 304, and/or the protective earth wire 902, such as a live-neutral combination, a live-earth combination, a live-neutral-earth combination, or any other combination. Similarly, two signal transformers 924, 926 are used to recover multiple power line communication signals from the first, second, and third signal lines 328A-C. The transformers 904, 906, 924, 926 may be capable of supporting an extended frequency band for power line communication transmissions.

In operation, the zero-cross signal passes through the signal coupling transformer 906 and is coupled to the third signal line 318C. A series capacitor blocks the zero-cross signal through the signal coupling transformer 904. A first power line communication signal is multiplexed with the DC power signal on the first signal line 318A, a second power line communication signal is multiplexed with the DC ground signal on the second signal line 318B, and a third power line communication signal is multiplexed with the zero-cross signal on the third signal line 318C. For example, the first and second power line communication signals may be differential signals and the third power line communication signal may be a single-ended signal.

The signal transformers 924, 926 of the electronic device 108A recover the first, second, and third power line communication signals. The signal transformers 924, 926 may also convert any single ended power line communication signals to differential power line communication signals. The example circuit configuration 900 may otherwise function as described above with respect to example circuit configurations 700, 800.

FIG. 10 illustrates an example frequency spectrum 1000 for signals multiplexed in a two-wire external power supply in accordance with one or more implementations. The example frequency spectrum 1000 includes a DC power signal frequency 1010, an upconverted zero-cross signal frequency band 1020, and a power line communication signal frequency band 1030. As shown in Fig, 10, upconverting the zero-cross signal to the upconverted zero-cross signal frequency band 1020 provides better separation between the DC power signal and the zero-cross signal. Furthermore, the upconverted zero-cross frequency band 1020 is below the power line communication signal frequency band 1030. In one or more implementations, the upconverted zero-cross frequency band 1020 may be in a range of 200 Kilohertz (KHz) to 300 KHz.

FIG. 11 conceptually illustrates electronic system 1100 with which any implementations of the subject technology may be implemented. Electronic system 1100, for example, can be a desktop computer, a laptop computer, a set-top box, a television, a server, a switch, a router, a base station, receiver, or generally any electronic device that can be coupled to a power line communication network. Such an electronic system includes various types of computer readable media and interfaces for various other types of computer readable media. Electronic system 1100 includes bus 1108, processing unit(s) 1112, system memory 1104, read-only memory (ROM) 1110, permanent storage device 1102, input device interface 1114, output device interface 1106, network interface 1116, and external power supply interface 1118, or subsets and variations thereof.

Bus 1108 collectively represents all system, peripheral, and chipset buses that communicatively connect the numerous internal devices of electronic system 1100. In one or more implementations, bus 1108 communicatively connects processing unit(s) 1112 with ROM 1110, system memory 1104, and permanent storage device 1102. From these various memory units, processing unit(s) 1112 retrieves instructions to execute and data to process in order to execute the processes of the subject disclosure. The processing unit(s) can be a single processor or a multi-core processor in different implementations.

ROM 1110 stores static data and instructions that are needed by processing unit(s) 1112 and other modules of the electronic system. Permanent storage device 1102, on the other hand, is a read-and-write memory device. This device is a non-volatile memory unit that stores instructions and data even when electronic system 1100 is off. One or more implementations of the subject disclosure use a mass-storage device (such as a magnetic or optical disk and its corresponding disk drive) as permanent storage device 1102.

Other implementations use a removable storage device (such as a floppy disk, flash drive, and its corresponding disk drive) as permanent storage device 1102. Like permanent storage device 1102, system memory 1104 is a read-and-write memory device. However, unlike storage device 1102, system memory 1104 is a volatile read-and-write memory, such as random access memory. System memory 1104 stores any of the instructions and data that processing unit(s) 1112 needs at runtime. In one or more implementations, the processes of the subject disclosure are stored in system memory 1104, permanent storage device 1102, and/or ROM 1110. From these various memory units, processing unit(s) 1112 retrieves instructions to execute and data to process in order to execute the processes of one or more implementations.

Bus 1108 also connects to input and output device interfaces 1114 and 1106. Input device interface 1114 enables a user to communicate information and select commands to the electronic system. Input devices used with input device interface 1114 include, for example, alphanumeric keyboards and pointing devices (also called "cursor control devices"). Output device interface 1106 enables, for example, the display of images generated by electronic system 1100. Output devices used with output device interface 1106 include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touch screen. In these implementations, feedback provided to the user can be any form of sensory feedback, such as visual feedback, auditory feedback, or tactile feedback; and input from the user can be received in any form, including acoustic, speech, or tactile input.

Bus 1108 also couples electronic system 1100 to a network (not shown) through network interface 1116. In this manner, the computer can be a part of a network of computers (such as a local area network ("LAN"), a wide area network ("WAN"), or an Intranet, or a network of networks, such as the Internet. Any or all components of electronic system 1100 can be used in conjunction with the subject disclosure.

Bus 1108 further couples electronic system 1100 to an external power supply interface 1118. The external power supply interface 1118 may include one or more of the components discussed above with respect to example systems 300, 400 and/or one or more of the circuits discussed above with respect to example circuit configurations 700, 800, 900. The external power supply interface 1118 may include multiple pins, such as two pins or three pins, for interfacing with a connector 206 that is coupled to an external power supply 208.

Many of the above-described features and applications may be implemented as software processes that are specified as a set of instructions recorded on a computer readable storage medium (alternatively referred to as computer-readable media, machine-readable media, or machine-readable storage media). When these instructions are executed by one or more processing unit(s) (e.g., one or more processors, cores of processors, or other processing units), they cause the processing unit(s) to perform the actions indicated in the instructions. Examples of computer readable media include, but are not limited to, RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra density optical discs, any other optical or magnetic media, and floppy disks. In one or more implementations, the computer readable media does not include carrier waves and electronic signals passing wirelessly or over wired connections, or any other ephemeral signals. For example, the computer readable media may be entirely restricted to tangible, physical objects that store information in a form that is readable by a computer. In one or more implementations, the computer readable media is non-transitory computer readable media, computer readable storage media, or non-transitory computer readable storage media.

In one or more implementations, a computer program product (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

While the above discussion primarily refers to microprocessor or multi-core processors that execute software, one or more implementations are performed by one or more integrated circuits, such as application specific integrated circuits (ASICs) or field programmable gate arrays (FPGAs). In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

A phrase such as "an aspect" does not imply that such aspect is essential to the subject technology or that such aspect applies to all configurations of the subject technology. A disclosure relating to an aspect may apply to all configurations, or one or more configurations. An aspect may provide one or more examples of the disclosure. A phrase such as an "aspect" may refer to one or more aspects and vice versa. A phrase such as an "embodiment" does not imply that such embodiment is essential to the subject technology or that such embodiment applies to all configurations of the subject technology. A disclosure relating to an embodiment may apply to all embodiments, or one or more embodiments. An embodiment may provide one or more examples of the disclosure. A phrase such an "embodiment" may refer to one or more embodiments and vice versa. A phrase such as a "configuration" does not imply that such configuration is essential to the subject technology or that such configuration applies to all configurations of the subject technology. A disclosure relating to a configuration may apply to all configurations, or one or more configurations. A configuration may provide one or more examples of the disclosure. A phrase such as a "configuration" may refer to one or more configurations and vice versa.

The word "exemplary" is used herein to mean "serving as an example, instance, or illustration." Any embodiment described herein as "exemplary" or as an "example" is not necessarily to be construed as preferred or advantageous over other embodiments. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. No claim element is to be construed under the provisions of 35 U.S.C. §112, sixth paragraph, unless the element is expressly recited using the phrase "means for" or, in the case of a method claim, the element is recited using the phrase "step for."

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A power supply unit, comprising:
a transformer configured to recover a first power line communication (PLC) signal and a second PLC signal from an alternating current (AC) power signal;
an alternating current/direct current (AC/DC) converter configured to convert the AC power signal into a first DC signal and a second DC signal, wherein the first DC signal is multiplexed with the first PLC signal and the second DC signal is multiplexed with the second PLC signal;
a first signal line coupled to the transformer and the AC/DC converter, wherein the first DC signal is multiplexed with the first PLC signal on the first signal line to be carried over a first wire; and
a second signal line coupled to the transformer and the AC/DC converter, wherein the second DC signal is multiplexed with the second PLC signal on the second signal line to be carried over a second wire.

2. The power supply unit of claim 1, further comprising:
a zero-cross circuit configured to detect zero-voltage crossings of the AC power signal, and to generate a zero-cross signal based on the detected zero-voltage crossings.

3. The power supply unit of claim 2, further comprising:
a third signal line coupled to the zero-cross circuit, wherein the third signal line carries the zero-cross signal to a third wire.

4. The power supply unit of claim 3, further comprising:
the first wire that communicatively couples the first signal line to a PLC device, wherein the first DC signal multiplexed with the first PLC signal is carried from the power supply unit to the PLC device over the first wire;
the second wire that communicatively couples the second signal line to the PLC device, wherein the second DC signal multiplexed with the second PLC signal is carried from the power supply unit to the PLC device over the second wire; and
the third wire that communicatively couples the third signal line to the PLC device, wherein the zero-cross signal is carried from the power supply unit to the PLC device over the third wire.

5. The power supply unit of claim 4, wherein the PLC device is configured to recover the first PLC signal from the first wire, recover the second PLC signal from the second wire, recover the first DC signal from the first wire, and recover the second DC signal from the second wire.

6. The power supply unit of any of claims 2 to 5, further comprising:
a modulator coupled to the zero-cross circuit and configured to modulate the zero-cross signal to obtain a modulated zero-cross signal, wherein the modulated zero-cross signal is multiplexed with the first DC signal and the first PLC signal on the first signal line.

7. The power supply unit of claim 6, further comprising:
the first wire that communicatively couples the first signal line to a PLC device, wherein the multiplexed first DC signal, first PLC signal, and modulated zero-cross signal are carried from the power supply unit to the PLC device over the first wire; and
the second wire that communicatively couples the second signal line to the PLC device, wherein the second DC signal multiplexed with the second PLC signal is carried from the power supply unit to the PLC device over the second wire.

8. The power supply unit of claim 7, wherein the PLC device is configured to recover the first PLC signal from the first wire, recover the second PLC signal from the second wire, recover the first DC signal from the first wire, recover the second DC signal from the second wire, recover the modulated zero-cross signal from the first wire, and demodulate the modulated zero-cross signal to recover the zero-cross signal.

9. The power supply unit of any of claims 2 to 8, wherein the zero-cross circuit comprises a photocoupler and at least one of a resistor or a diode, and the zero-cross circuit is coupled to a filter that isolates the zero-cross signal.

10. The power supply unit of any preceding claim, wherein the power supply unit is coupled to a mains live wire and a mains neutral wire over which the AC power signal is received, the first PLC signal being carried on the mains live wire and the second PLC signal being carried on the mains neutral wire.

11. The power supply unit of any preceding claim, wherein the first PLC signal and the second PLC signal are out of phase by approximately 180 degrees.

12. The power supply unit of any preceding claim, wherein the first DC signal comprises a DC power signal and the second DC signal comprises a DC ground signal.

13. The power supply unit of claim 12, further comprising:
a first filter coupled to the first signal line between the AC/DC converter and the transformer, wherein the first filter is configured to filter the DC power signal from the first DC signal output by the AC/DC converter; and
a second filter coupled to the second signal line between the AC/DC converter and the transformer, wherein the second filter is configured to filter the DC ground signal from the second DC signal output by the AC/DC converter.

14. A power line communication (PLC) device, comprising:
a first signal line coupled to an external power supply, wherein the first signal line is configured to carry a first signal from the external power supply;
a second signal line coupled to the external power supply, wherein the second signal line is configured to carry a second signal from the external power supply;
a first filter coupled to the first signal line and configured to filter the first signal to recover a direct current (DC) power signal;
a second filter coupled to the second signal line and configured to filter the second signal to recover a DC ground signal; and
a transformer coupled to the first signal line and the second signal line, wherein the transformer is configured to recover a first PLC signal and a second PLC signal from the first signal.

15. A method for coupling a power line communication (PLC) device to an external power supply, the method comprising:
receiving alternating current (AC) power signals a first power line communication (PLC) signal and a second PLC signal over mains wires;
converting the AC power signals to a direct current (DC) power signal and a DC ground signal;
multiplexing the first PLC signal with the DC power signal;
multiplexing the second PLC signal with the DC ground signal; and
transmitting the multiplexed first PLC signal and DC power signal over a first wire, and the multiplexed second PLC signal and ground DC signal over a second wire.
